# EUROPEAN PATENT APPLICATION

(11) **EP 4 387 053 A1**
(43) Date of publication of application: **19.06.2024**
(21) Application number: 22894860.0
(22) Date of filing: 16.11.2022
(51) Int. Cl.: H02K 1/16, H02K 1/14, H02K 3/12, H02K 3/28, H02K 3/48, H02K 3/50

(54) **STATOR ASSEMBLY AND MOTOR**

(30) Priority: 17.11.2021 CN 202111362137; 17.12.2021 CN 202111554829
(71) Applicant: Shanghai EVK E-Motor Technology Co., Ltd., Shanghai 201208 (CN)
(72) Inventor: LU, Fangyou, Shanghai 201208 (CN)
(74) Representative: Wang, Bo
(86) International application number: PCT/CN2022/132367
(87) International publication number: WO 2023/088328

(57) **Abstract**

The present disclosure relates to the technical field of motors, and in particular, relates to a stator assembly and a motor. The stator assembly includes: a stator core and a winding; wherein a plurality of stator slots are arranged in the stator core, the stator slots being successively arranged in an annular array along a circumferential direction of the stator core; and the winding is wound on a rectangular conductor; wherein a plurality of layers of rectangular conductors are mounted in each of the stator slots, the layers of rectangular conductors being successively arranged along a radial direction of the stator core; wherein an average cross-sectional area of the rectangular conductors close to a center of the stator core is greater than an average cross-sectional area of all the rectangular conductors in the stator slot. This reduces loss density, balances heat generation and heat dissipation of different conductors in the stator slots, so as to improve heat dissipation performance of the motor by reducing a maximum temperature of the motor.

## Description

### TECHNICAL FIELD

The present disclosure relates to the technical field of motors, and in particular, relates to a stator assembly and a motor.

### BACKGROUND

With the development and maturity of the industry of new energy vehicles, the demand on reduction of product costs is more urgent. As a key component of a drive system of the new energy vehicle, the driver motor is dominant in the total cost. The miniaturization of the motor is an important direction to reduce the cost. However, one of the main factors restricting the miniaturization of the motor is heat generation and heat dissipation of the motor. If the heat generation of the motor can be effectively reduced or the heat dissipation of the motor can be improved, the miniaturization of the motor is facilitated, thereby reducing the cost.

Low loss materials are commonly, or the flat wire technology is used to increase the amount of copper to reduce the heat generation of the motor. The current flat wire technology does not give full play to its advantages of increasing the amount of copper, which limits the further improvement of performance of the motor.

As for the improvement of the heat dissipation of an electric motor, cooling modes are commonly changed, such as air cooling, water cooling, and oil cooling. At present, no effective measures have been proposed to improve the uneven distribution of the heat of conductors in the slots, and no effective measures have been proposed to improve the difference of heat dissipation inside and outside the layers of conductors in the slots, which limits the further improvement of performance of the motor. With respect to heat dissipation, less consideration is given from the perspective of balancing heat dissipation of the motor.

### SUMMARY

In view of the above problem, in one aspect, embodiments of the present disclosure provide a stator assembly. The stator assembly includes a stator core and a winding; wherein a plurality of stator slots are arranged in the stator core, the stator slots being successively arranged in an annular array along a circumferential direction of the stator core; and the winding is wound on a rectangular conductor;
wherein a plurality of layers of rectangular conductors are mounted in each of the stator slots, the layers of rectangular conductors being successively arranged along a radial direction of the stator core; wherein an average cross-sectional area of the rectangular conductors close to a center of the stator core is greater than an average cross-sectional area of all the rectangular conductors in the stator slot.

In some embodiments, in the same one of the stator slots, the cross-sectional area of a layer of rectangular conductor closest to the center of the stator core is maximum, and the cross-sectional area of a layer of rectangular conductor closest to an outer side of the stator core is minimum.

In some embodiments, the stator slots are stepped stator slots, and a plurality of rectangular slots in communication with each other are arranged in the stepped stator slots; wherein cross-sectional areas of the rectangular slots are successively decreased along a direction from the center of the stator core to an outer side of the stator core.

In some embodiments, a conductor set formed of a plurality of layers of rectangular conductors is arranged in each of the rectangular slots, a size of each of the rectangular slots is equal to a size of the conductor set therein, and the cross-sectional areas of the rectangular conductors in the same rectangular slot are successively decreased along the direction from the center of the stator core to the outer side of the stator core.

In some embodiments, in the same one of the stator slots, with respect to cross-sectional areas of the plurality of layers of rectangular conductors, a maximum cross-sectional area is not greater than 1.29 times of an average cross-sectional area.

In some embodiments, in the same one of the stator slots, with respect to the cross-sectional areas of the plurality of layers of rectangular conductors, a minimum cross-sectional area is not less than 0.79 times of the average cross-sectional area.

In some embodiments, in the same one of the stator slots, widths of conductor sets are successively increased along a direction from the center of the stator core to an outer side of the stator core.

In some embodiments, the stator slots are formed by a plurality of rectangular slots in communication with each other; wherein a conductor set is arranged in each of the rectangular slots, and the dimension of each of the rectangular slots is the same as the dimension of the conductor set therein.

In some embodiments, in the same one of the stator slots, widths of conductor sets are successively increased along a direction from the center of the stator core to an outer side of the stator core.

In some embodiments, in the same one of the stator slots, thicknesses of the conductor sets are successively decreased along the direction from the center of the stator core to the outer side of the stator core.

In some embodiments, the stator slots are equal-width stator slots.

In some embodiments, the rectangular conductors are enameled wires, the enameled wire close to the outer side of the stator core are first enameled wires, and the enameled wires close to the center of the stator core are second enameled wires, recesses being arranged in bottoms of the second enameled wires.

In some embodiments, the recesses are recesses having a trapezoidal cross section or recesses having a semi-circular cross section.

In some embodiments, depths of the recesses range from 0.15 mm to 0.5 mm.

In some embodiments, the recesses face towards the openings of the stator slots.

In some embodiments, in the same one of the stator slots, a number of the second enameled wires is less than half of a total number of the first enameled wires and the second enameled wires.

In another aspect, embodiments of the present disclosure further provide a rotor assembly and the stator assembly as described above; wherein the rotor assembly is situated on an inner side of the stator assembly.

In some embodiments, a distance between two adjacent sets of stator slots at an end closest to a center of the stator core is equal or approximate to a distance between the two adjacent sets of stator slots at an end closest to an outer side of the stator core.

The embodiments of the present disclosure achieve the following beneficial effects: By increasing the area of the conductors in the slots near the center of the stator core, reducing loss densities, balancing heat generation and heat dissipation of different conductors in the stator slots, heat dissipation performance of the motor is achieved by reducing a maximum temperature of the motor. The present disclosure further uses an enameled wire with a recess, wherein the enameled wire is placed at an opening of a mounting slot or close to the opening. Since in armature reaction, a magnetic potential is the strongest at the opening, a leakage magnetic chain in the slot is most easily generated at the opening. With the enameled wire with the recess, current distribution uniformity of conductors at the opening may be effectively improved, thereby reducing alternating current loss. In addition, the structure is simple and convenient to use.

Other features and advantages of the embodiments of the present disclosure are described hereinafter in the specification, which are partially apparent over the specification or acknowledged by practice of the present disclosure. The objects and other advantages of the present disclosure may be practiced and obtained by using the specifically designated structures in the specification, claims and accompanying drawings.

### BRIEF DESCRIPTION OF THE DRAWINGS

For clearer descriptions of technical solutions according to the embodiments of the present disclosure or the related art, drawings that are to be referred for description of the embodiments or the related art are briefly described hereinafter. Apparently, the drawings described hereinafter merely illustrate some embodiments of the present disclosure. Persons of ordinary skill in the art may also derive other drawings based on the drawings described herein without any creative effort.
FIG. 1 is a schematic cross-sectional view of a stator slot according to a comparative example of the present disclosure;
FIG. 2 is a schematic diagram of temperature field distribution of conductors in stator slots according to a comparative example of the present disclosure;
FIG. 3 is a schematic cross-sectional view of a stator slot according to a first embodiment of the present disclosure;
FIG. 4 is a schematic diagram of temperature field distribution of conductors in stator slots according to the first embodiment of the present disclosure;
FIG. 5 is a schematic cross-sectional view of a stator slot according to a second embodiment of the present disclosure;
FIG. 6 is a schematic diagram of temperature field distribution of conductors in stator slots according to the second embodiment of the present disclosure;
FIG. 7 is a schematic cross-sectional view of a stator slot according to a third embodiment of the present disclosure;
FIG. 8 is a schematic diagram of temperature field distribution of conductors in stator slots according to the third embodiment of the present disclosure;
FIG. 9 is a schematic cross-sectional view of a stator slot according to a fourth embodiment of the present disclosure;
FIG. 10 is a schematic diagram of temperature field distribution of conductors in stator slots according to the fourth embodiment of the present disclosure;
FIG. 11 is a schematic cross-sectional view of a stator slot according to a fifth embodiment of the present disclosure;
FIG. 12 is a schematic diagram of temperature field distribution of conductors in stator slots according to the fifth embodiment of the present disclosure;
FIG. 13 is a schematic top structural diagram of a stator and an enameled wire according to a sixth embodiment of the present disclosure;
FIG. 14 is a schematic structural diagram of an enameled wire set in a using state according to the sixth embodiment of the present disclosure;
FIG. 15 is a schematic structural diagram of a second enameled wire in a using state according to the sixth embodiment of the present disclosure;
FIG. 16 is a schematic structural diagram of the second enameled wire in another using state according to the sixth embodiment of the present disclosure;
FIG. 17 is a schematic top structural diagram of a stator and an enameled wire according to a seventh embodiment of the present disclosure;
FIG. 18 is a schematic structural diagram of an enameled wire set in a using state according to the seventh embodiment of the present disclosure; and
FIG. 19 is a schematic structural diagram of the enameled wire set in another using state according to the seventh embodiment of the present disclosure.

Reference numerals and denotations thereof: 100-stator; 101-stator slot (mounting slot); 102-opening of stator slot; 103-bottom of stator slot; C1, C2, C3, C4, C5-rectangular slots; L1, L2, L3, L4, L5, L6, L7, L8-rectangular conductors; 200-enameled wire set; 201-first enameled wire; 202-second enameled wire; 203-recess; 204-insulative layer; 205-metal layer; 301-central side of core; 302-outer side of core; 401-width; 402-thickness.

### DETAILED DESCRIPTION

For clearer descriptions of the objectives, technical solutions, and advantages of the embodiments of the present disclosure, the following clearly and completely describes the technical solutions in the embodiments of the present disclosure with reference to the accompanying drawings in the embodiments of the present disclosure. Apparently, the described embodiments are merely a part rather than all of the embodiments of the present disclosure. Based on the embodiments of the present disclosure, all other embodiments derived by persons of ordinary skill in the art without any creative efforts shall fall within the protection scope of the present disclosure.

Some embodiments of the present disclosure provide a motor. The motor includes a rotor assembly and a stator assembly. The rotor assembly is situated on an inner side of the stator assembly.

Specifically, the stator assembly includes a stator core and a winding. A plurality of stator slots are arranged in the stator core. The stator slots are successively arranged in an annular array along a circumferential direction of the stator core. The winding is wound on a rectangular conductor.

A plurality of layers of rectangular conductors are arranged in each of the stator slots, the layers of rectangular conductors in the same stator slot being successively arranged along a radial direction of the stator core; wherein a cross-sectional area of a layer of rectangular conductor closest to a center of the stator core may be greater than an average cross-sectional area of all the rectangular conductors in the same stator slot, or an average cross-sectional area of the rectangular conductors close to the center of the stator core is greater than an average cross-sectional area of all the rectangular conductors in the stator slots.

The closer the rectangular conductors are to the center of the stator core, the more severe the losses are. The losses include direct current (DC) losses and alternating current (AC) losses. In addition, the closer the rectangular conductors are to the center of the stator assembly, the poorer the heat dissipation effect is.

It should be noted that the a loss of a conductor typically includes an AC loss and a DC loss. The AC loss is a loss related to the current frequency caused by skin effects, proximity effects and eddy currents. The DC loss is a product of a DC resistance of the conductor and the square of the current, independent of the frequency of the current.

According to the embodiments of the present disclosure, by reducing the cross-sectional areas of the conductors close to the center of the stator assembly, loss densities of the conductors are reduced, such that a maximum temperature of the stator assembly is lowered, and performance of the motor is optimized.

Furthermore, all the rectangular conductors in the same stator slot may be divided into several conductor sets along the radial direction of the stator core. Each of the conductor groups sets includes one or more layers of rectangular conductors. The cross-section of each of the conductor sets is generally rectangular, the dimension of each of the conductor sets along the radial direction of the stator core is referred to as a thickness of the conductor set, and the dimension perpendicular to the radial direction of the stator core is referred to as a width of the conductor set.

It should be noted that the specific shape of the stator slot is determined by the shape and number of all rectangular conductors in the stator slot. The stator slot may be considered as being formed of a plurality of rectangular slots in communication with each other. A conductor set is provided in each of the rectangular slots, and each of the rectangular slots has the same dimension as the conductor set therein. The stator slots may be rectangular or stepped.

Further, in the same one of the stator slots, widths of the conductor sets are successively increased to form a step shape along a direction from the center of the stator core to an outer side of the stator core. The stator slots are arranged to be step-like, i.e., the rectangular conductors in the stator slots are wholly stepped, such that the amount of copper used is increased and motor losses are reduced.

A distance between two adjacent sets of stator slots at an end closest to a center of the stator core is equal or approximate to a distance between the two adjacent sets of stator slots at an end closest to an outer side of the stator core. Such arrangements are made to maximize the amount of copper used by the stator assembly as much as possible, ensure a smooth magnetic circuit at the teeth of the stator core, and optimize the heat dissipation performance of the motor.

In the same one of the stator slots, the cross-sectional area of a layer of rectangular conductor closest to the center of the stator core is maximum, and the cross-sectional area of a layer of rectangular conductor closest to an outer side of the stator core is minimum.

The cross-sectional area of the rectangular conductor closest to the center of the stator core is increased to reduce a loss density thereof; and the cross-sectional area of the rectangular conductor closest to the outer side of the stator core is decreased to increase the loss density thereof. Performance of the motor is further optimized, such that heat generation and dissipation are eventually balanced between the inner layers of rectangular conductor and the outer layers of rectangular conductors.

In the same stator slot, the cross-sectional areas of single layers of rectangular conductors in different rectangular slots are successively decreased along the direction from the center of the stator core to the outer side of the stator core.

The closer the rectangular conductors are to the center of the stator core, the more severe the losses are. In addition, the closer the rectangular conductors are to the center of the stator assembly, the poorer the heat dissipation effect is. From the inner layer to the outer layer, the loss is decreased layer by layer, and the heat dissipation effect becomes better layer by layer. Therefore, from the inner layer to the outer layer, the cross-sectional areas of the rectangular conductors in different rectangular slots are successively decreased, such that heat generation and heat dissipation of the motor are optimally balanced.

In the same one of the stator slots, with respect to cross-sectional areas of the plurality of layers of rectangular conductors, a maximum cross-sectional area of the layer of rectangular conductor closest to the center of the stator core is not greater than 1.29 times of the average cross-sectional area.

In this way, while reducing the loss density of the innermost layer of rectangular conductor, the cross-sectional area of the innermost layer of rectangular conductor is prevented from being excessively large, and the formation of windings is affected.

In the same one of the stator slots, with respect to the cross-sectional areas of the plurality of layers of rectangular conductors, the minimum cross-sectional area is not less than 0.79 times of the average cross-sectional area.

In this way, while reducing a maximum loss density of the windings and ensuring balance of an overall loss density, the minimum cross-sectional area is prevented from being excessively small, the overall formation of the windings is affected.

### Comparative Example

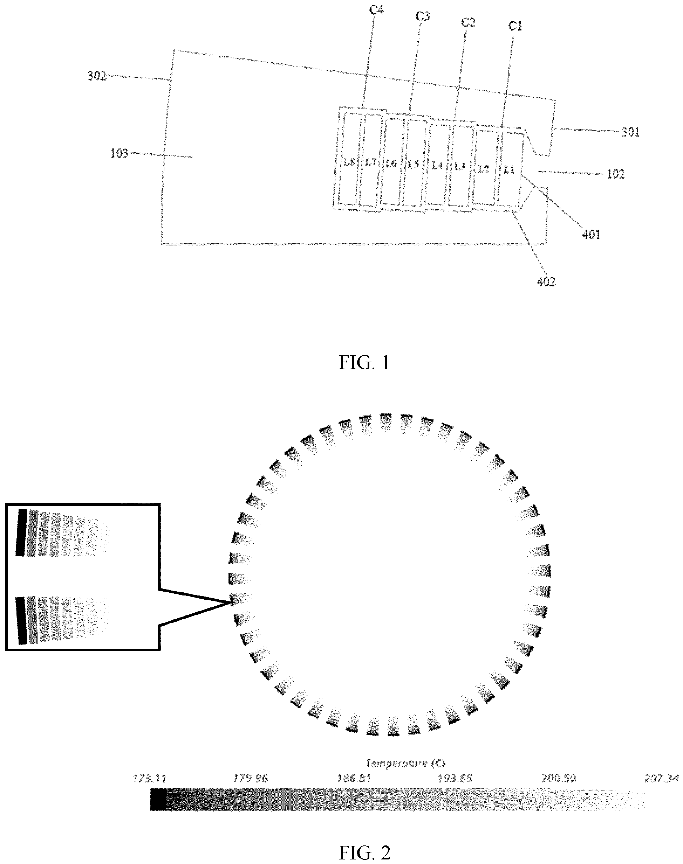

As illustrated in FIG. 1, a related comparative technical solution employs stepped stator slots. Each of the stator slots is formed of four rectangular slots in communication with each other, and eight layers of rectangular conductors are arranged in each of the stator slots. Rectangular slots in each of the stator slots are successively named as C1, C2, C3, and C4. The rectangular slot C1 is positioned at the opening of the stator slot, and is a rectangular slot, closest to the center of the stator core, in the stator slot. The rectangular slot C4 is positioned at the bottom of the stator slot, and is a rectangular slot, closest to the outer side of the stator core, in the stator slot. Rectangular conductors in a same stator slot are successively named as L1, L2, L3, L4, L5, L6, L7, and L8. The rectangular conductor L1 is positioned at the opening of the stator slot, and is an innermost layer of rectangular conductor, closest to the center of the stator core, in the stator slot. The rectangular conductor L8 is positioned at the bottom of the stator slot, and is an outermost layer of rectangular conductor, closest to the outer side of the stator core, in the stator slot. Using FIG. 1 as an example, a thickness 402 of the conductor L1 is a dimension of the conductor L1 from the center to the outer side of the stator core, and a direction perpendicular to a direction of the thickness is a width 401 of the conductor L1. It can be seen that in FIG. 1, the thicknesses and the width of the conductor L1 are respectively equal to those of the conductor L2, and are received in the rectangular slot C1; a thickness and a width of the conductor L3 are respectively equal to those of the conductor L4, and are received in the rectangular slot C2; a thickness and a width of the conductor L5 are respectively equal to those of the conductor L6, and are respectively received in the rectangular slot C; and a thickness and a width of the conductor L7 are respectively equal to those of the conductor L8, and are received in the rectangular slot C4. As seen from FIG. 1, the widths of the conductors L2, L4, L6, and L8 successively increase, whereas the thicknesses thereof are successively decreased. As seen in Table 1, the cross-sectional areas of the conductors remain unchanged.

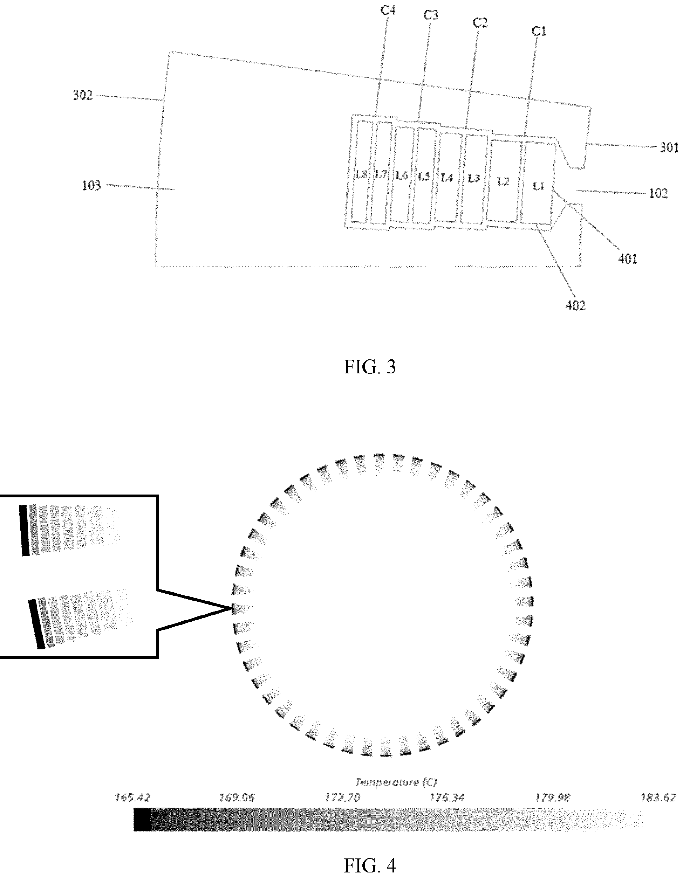

In FIG. 3, FIG. 5, FIG. 7, FIG. 9, and FIG. 11 corresponding to the first to fifth embodiments of the present disclosure, positions of the rectangular slot and the stator core, positions of the opening and the bottom in the rectangular slot, and positions of the center of the stator core and the outer side of the iron core all respectively correspond to FIG. 1 illustrating the comparative technical solution. Further, in the first to fifth embodiments of the present disclosure, although different numbers of rectangular slots and conductors are provided, the widths and thicknesses of the conductors in the present disclosure are consistent with those of the conductors in the related art corresponding to FIG. 1. In addition, in the embodiments of the present disclosure, the inner layers of rectangular conductors are all rectangular conductors relatively closer to the center of the stator core (the openings of the stator slots), and the outer layers of rectangular conductors are all rectangular conductors relatively closer to the outer side of the stator core (the bottoms of the stator slots), which are not described in detail in the embodiments.

**Table 1 Simulation data sheet for conductors in stator slots in the comparative example**

| Serial number of scheme | Serial number of conductor in stator slot | L1 | L2 | L3 | L4 | L5 | L6 | L7 | L8 |
|---|---|---|---|---|---|---|---|---|---|
| Comparative Example | Width of conductor (mm) | 5.4 | 5.4 | 5.88 | 5.88 | 6.32 | 6.32 | 6.76 | 6.76 |
| | Thickness of | 1.58 | 1.58 | 1.45 | 1.45 | 1.35 | 1.35 | 1.26 | 1.26 |
| | conductor (mm) | | | | | | | | |
| | Cross-sectional area of conductor (mm²) | 8.51 | 8.51 | 8.51 | 8.51 | 8.51 | 8.51 | 8.51 | 8.51 |
| | Loss of single conductor (W) | 7.91 | 5.49 | 5.13 | 4.83 | 4.81 | 4.70 | 4.78 | 4.66 |
| | Loss density (W/mm²) | 0.93 | 0.65 | 0.60 | 0.57 | 0.57 | 0.55 | 0.55 | 0.55 |
| | Maximum temperature (°C) | 207.3 | 203.9 | 200.2 | 196.7 | 192.5 | 187.7 | 181.4 | 173.2 |
| | Minimum temperature (°C) | 207.2 | 203.8 | 200.1 | 196.6 | 192.4 | 187.6 | 181.2 | 173.1 |

As listed in Table 1, in this comparative example, the areas of the conductors LI, L2, L3, L4, L5, L6, L7, and L8 in the stator slot are all equal. The cross-sectional areas of the layers of rectangular conductors are equal. The widths of the conductor L2, L4, L6, and L8 are successively increased; and the thicknesses of the conductors L2, L4, L6, and L8 are successively decreased. Both the single-conductor losses and the loss densities of the conductors L1, L2, L3, L4, L5, L6, L7, and L8 are successively decreased. The innermost layer of rectangular conductor has a maximum loss density of 0.93 W/mm², and the outermost layer of rectangular conductor has a minimum loss density of 0.55 W/mm².

FIG. 2 is a schematic diagram of temperature field distribution of windings in stator slots of a stator assembly when a motor is running according to a comparative example of the present disclosure. For the specific simulation data thereof, reference may be made to Table 1. The temperatures are gradually decreased along a direction from the center of the stator core to an outer wall of the stator core. In the same stator slot, the innermost layer of rectangular conductor has a maximum temperature of up to 207.3°C; the outermost layer of rectangular conductor has a minimum temperature of 173.1 °C; and a maximum temperature difference of the windings in the stator slot is 34.2°C.

In this comparative example, the innermost layer of rectangular conductor has a maximum loss density, and a difference between the maximum loss density and a minimum loss density of the rectangular conductors in the stator slot is large. As a result, the temperature of the innermost layer of rectangular conductor of the windings in the slot is over high, and has a large temperature difference from the outermost layer of rectangular conductor. Therefore, the stator assembly of the comparative example is subject to severe loss, and the innermost layer of rectangular conductor has a large loss density whereas the outermost layer of rectangular conductor has a small loss density, which is not conducive to balancing heat generation and heat dissipation.

### First Embodiment

As illustrated in FIG. 3, the technical solution according to this embodiment employs stepped stator slots. Each of the stator slots is formed of four rectangular slots in communication with each other, and eight layers of rectangular conductors are arranged in each of the stator slots. Rectangular slots in each of the stator slots are successively named as C1, C2, C3, and C4. The rectangular slot C1 is positioned at the opening of the stator slot, and is a rectangular slot, closest to the center of the stator core, in the stator slot. The rectangular slot C4 is positioned at the bottom of the stator slot, and is a rectangular slot, closest to an outer circle of the stator core, in the stator slot. Rectangular conductors in each of the stator slots are successively named as L1, L2, L3, L4, L5, L6, L7, and L8. The rectangular conductor L1 is positioned at the opening of the stator slot, and is an innermost layer of rectangular conductor, closest to the center of the stator core, in the stator slot. The rectangular conductor L8 is positioned at the bottom of the stator slot, and is an outermost layer of rectangular conductor, closest to the outer side of the stator core, in the stator slot. The conductors L1 and L2 belong to the same conductor set and are both received in the rectangular slot C1, and have equal thicknesses and widths; the conductors L3 and L4 belong to the same conductor set and are both received in the rectangular slot C2, and have equal thicknesses and widths; the conductors L5 and L6 belong to the same conductor set and are both received in the rectangular slot C3, and have equal thicknesses and widths; and the conductors L6 and L7 belong to the same conductor set and are both received in the rectangular slot C4, and have equal thicknesses and widths.

As listed in Table 2, in the first embodiment, with respect to the rectangular conductors in the stator slot, the widths of the conductors L2, L4, L6, and L8 are successively increased; the thicknesses of the conductors L2, L4, L6, and L8 are successively decreased; the cross-sectional areas of the conductors L1 and L2 are equal, the cross-sectional areas of the conductors L3 and L4 are equal, the cross-sectional areas of the conductors L5 and L6 are equal, and the cross-sectional areas of the conductors L7 and L8 are equal; the cross-sectional areas of the conductors L2, L4, L6, and L8 are successively decreased; and an average cross-sectional area is 8.39 mm², the cross-sectional area of the conductor L1 is 1.29 times of the average cross-sectional area, and the cross-sectional area of the conductor L8 is 0.81 times of the average cross-sectional area. An average cross-sectional area of the conductors L2 and L4 is greater than an average cross-sectional area of the conductors L6 and L8, and the cross-sectional area of each of the conductors L2 and L4 is greater than the average cross-sectional area, and the cross-sectional area of each of the conductors L6 and L8 is less than the average cross-sectional area. The conductor L7 has a maximum loss density of 0.85 W/mm², and the conductor L2 has a minimum loss density of 0.48 W/mm².

**Table 2 Simulation data sheet for conductors in stator slots in the first embodiment**

| Serial number of scheme | Serial number of conductor in stator slot | L1 | L2 | L3 | L4 | L5 | L6 | L7 | L8 |
|---|---|---|---|---|---|---|---|---|---|
| First Embodiment | Width of conductor (mm) | 5.4 | 5.4 | 5.88 | 5.88 | 6.32 | 6.32 | 6.76 | 6.76 |
| | Thickness of conductor (mm) | 2.00 | 2.00 | 1.44 | 1.44 | 1.19 | 1.19 | 1.00 | 1.00 |
| | Cross-sect | 10.80 | 10.80 | 8.47 | 8.47 | 7.52 | 7.52 | 6.76 | 6.76 |
| | ional area of conductor (mm²) | | | | | | | | |
| | Loss of single conductor (W) | 8.30 | 5.16 | 4.94 | 4.73 | 5.18 | 5.14 | 5.72 | 5.67 |
| | Loss density (W/mm²) | 0.77 | 0.48 | 0.58 | 0.56 | 0.69 | 0.68 | 0.85 | 0.84 |
| | Maximum temperatur e(°C) | 183.6 | 180.9 | 179.7 | 178.9 | 177.9 | 175.9 | 172.2 | 165.6 |
| | Minimum temperatur e(°C) | 183.5 | 180.7 | 179.6 | 178.8 | 177.7 | 175.6 | 172.0 | 165.4 |

FIG. 4 is a schematic diagram of temperature field distribution of windings in stator slots of a stator assembly when a motor is running according to the first embodiment of the present disclosure. For the specific simulation data thereof, reference may be made to Table 2. The temperatures are gradually decreased along a direction from the center of the stator core to an outer wall of the stator core. In the same stator slot, the innermost layer of rectangular conductor has a maximum temperature of up to 183.6°C; the outermost layer of rectangular conductor has a minimum temperature of 165.4°C; and a maximum temperature difference of the windings in the stator slot is 18.2°C.

Compared with the comparative example, in the stator assembly according to the first embodiment, the conductor L7 has a maximum loss density which is however decreased relative to that in the comparative example, and a difference between the maximum loss density and a minimum loss density of the rectangular conductors in the stator slot is decreased, and a loss density of the innermost layer of rectangular conductor is likewise decreased. In this way, the temperature of the innermost layer of rectangular conductor of the windings in the slot is decreased, i.e., the maximum temperature of the windings in the slot is decreased, and has a decreased temperature difference from the outermost layer of rectangular conductor. Therefore, in the stator assembly according to the first embodiment, although the loss densities of the outer layers of rectangular conductors increase, the outer layers of rectangular conductors tend to dissipate heat; and the loss density of the innermost layer of rectangular conductor is decreased, which is conducive to balancing heat generation and heat dissipation.

### Second Embodiment

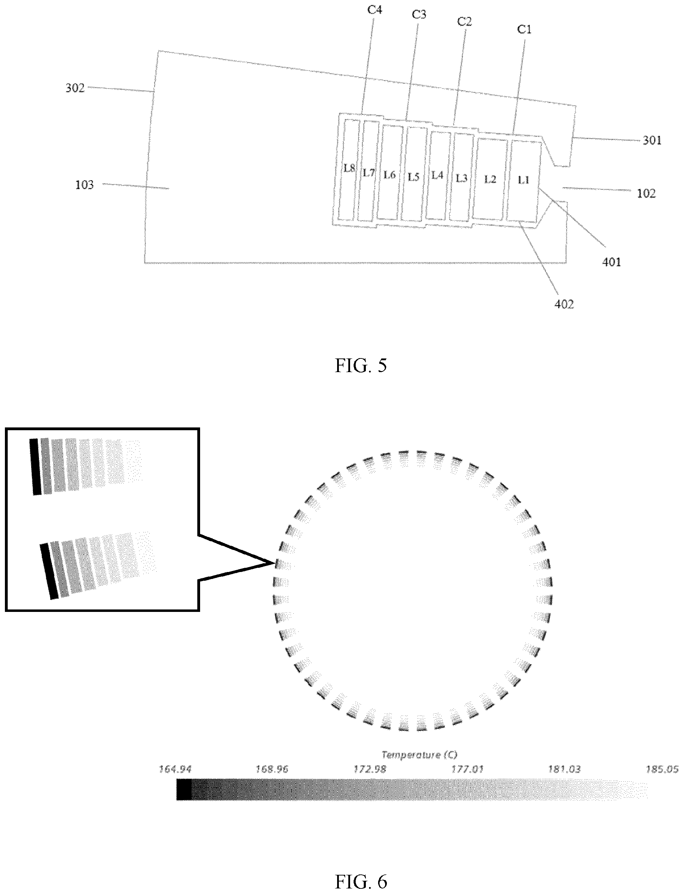

As illustrated in FIG. 5, the technical solution according to this embodiment also employs stepped stator slots. Each of the stator slots is formed of four rectangular slots in communication with each other, and eight layers of rectangular conductors are arranged in each of the stator slots. Rectangular slots in each of the stator slots are successively named as C1, C2, C3, and C4. The rectangular slot C1 is positioned at the opening of the stator slot, and is a rectangular slot, closest to the center of the stator core, in the stator slot. The rectangular slot C4 is positioned at the bottom of the stator slot, and is a rectangular slot, closest to an outer circle of the stator core, in the stator slot. Rectangular conductors in a same stator slot are successively named as L1, L2, L3, L4, L5, L6, L7, and L8. The rectangular conductor L1 is positioned at the opening of the stator slot, and is an innermost layer of rectangular conductor, closest to the center of the stator core, in the stator slot. The rectangular conductor L8 is positioned at the bottom of the stator slot, and is an outermost layer of rectangular conductor, closest to an outer circle of the stator core, in the stator slot. The conductors L1 and L2 belong to the same conductor set and are both received in the rectangular slot C1, and have equal thicknesses and widths; the conductors L3 and L4 belong to the same conductor set and are both received in the rectangular slot C2, and have equal thicknesses and widths; the conductors L5 and L6 belong to the same conductor set and are both received in the rectangular slot C3, and have equal thicknesses and widths; and the conductors L6 and L7 belong to the same conductor set and are both received in the rectangular slot C4, and have equal thicknesses and widths.

As listed in Table 3, in the second embodiment, the widths of the conductors L2, L4, L6, and L8 are successively increased; the thicknesses of the conductors L2, L4, L6, and L8 are successively decreased; the cross-sectional areas of the conductors L1 and L2 are equal, the cross-sectional areas of the conductors L3 and L4 are equal, the cross-sectional areas of the conductors L5 and L6 are equal, and the cross-sectional areas of the conductors L7 and L8 are equal; the cross-sectional areas of the conductors L2, L4, L6, and L8 have an overall tendency of decrease, wherein the cross-sectional areas of the conductors L2, L4, and L8 are successively decreased whereas the cross-sectional area of the conductor L6 is the second largest; and an average cross-sectional area is 8.41 mm², the cross-sectional area of the conductor L1 is 1.28 times of the average cross-sectional area, and the cross-sectional area of the conductor L8 is minimum and is 0.80 times of the average cross-sectional area. An average cross-sectional area of the conductors L2 and L4 is greater than an average cross-sectional area of the conductor L6 and L8. The conductor L8 has a maximum loss density of 0.84 W/mm², and the conductor L2 has a minimum loss density of 0.48 W/mm².

**Table 3 Simulation data sheet for conductors in stator slots in the second embodiment**

| Serial number of scheme | Serial number of conductor in stator slot | L1 | L2 | L3 | L4 | L5 | L6 | L7 | L8 |
|---|---|---|---|---|---|---|---|---|---|
| Second Embodiment | Width of conductor (mm) | 5.4 | 5.4 | 5.88 | 5.88 | 6.32 | 6.32 | 6.76 | 6.76 |
| | Thickness of conductor (mm) | 2.00 | 2.00 | 1.28 | 1.28 | 1.35 | 1.35 | 1.00 | 1.00 |
| | Cross-sectional area of conductor (mm²) | 10.80 | 10.80 | 7.53 | 7.53 | 8.53 | 8.53 | 6.76 | 6.76 |
| | Loss of single conductor (W) | 8.29 | 5.17 | 5.32 | 5.18 | 4.76 | 4.67 | 5.71 | 5.66 |
| | Loss density (W/mm²) | 0.77 | 0.48 | 0.71 | 0.69 | 0.56 | 0.55 | 0.84 | 0.84 |
| | Maximum temperature (°C) | 185.1 | 182.3 | 181.6 | 180.4 | 177.7 | 175.1 | 171.5 | 165.1 |
| | Minimum temperature (°C) | 184.9 | 182.1 | 181.3 | 180.1 | 177.3 | 174.8 | 171.3 | 164.9 |

FIG. 6 is a schematic diagram of temperature field distribution of windings in stator slots of a stator assembly when a motor is running according to the second embodiment of the present disclosure. For the specific simulation data thereof, reference may be made to Table 3. The temperatures are gradually decreased along a direction from the center of the stator core to an outer wall of the stator core. In the same stator slot, the innermost layer of rectangular conductor has a maximum temperature of up to 185.1°C; and the outermost layer of rectangular conductor has a minimum temperature of 164.9°C. A maximum temperature difference of the windings in the stator slot is 20.2°C

Compared with the comparative example, in the stator assembly according to the second embodiment, the outermost layer of rectangular conductor has a maximum loss density which is however decreased relative to that in the comparative example, and a loss density of the innermost layer of rectangular conductor is decreased. In this way, the temperature of the innermost layer of rectangular conductor of the windings in the slot is decreased, i.e., the maximum temperature of the windings in the slot is decreased, and has a decreased temperature difference from the outermost layer of rectangular conductor. Therefore, in the stator assembly according to the second embodiment, although the loss densities of the outer layers of rectangular conductors increase, the outer layers of rectangular conductors tend to dissipate heat; and the loss density of the innermost layer of rectangular conductor is decreased, which is conducive to balancing heat generation and heat dissipation.

### Third Embodiment

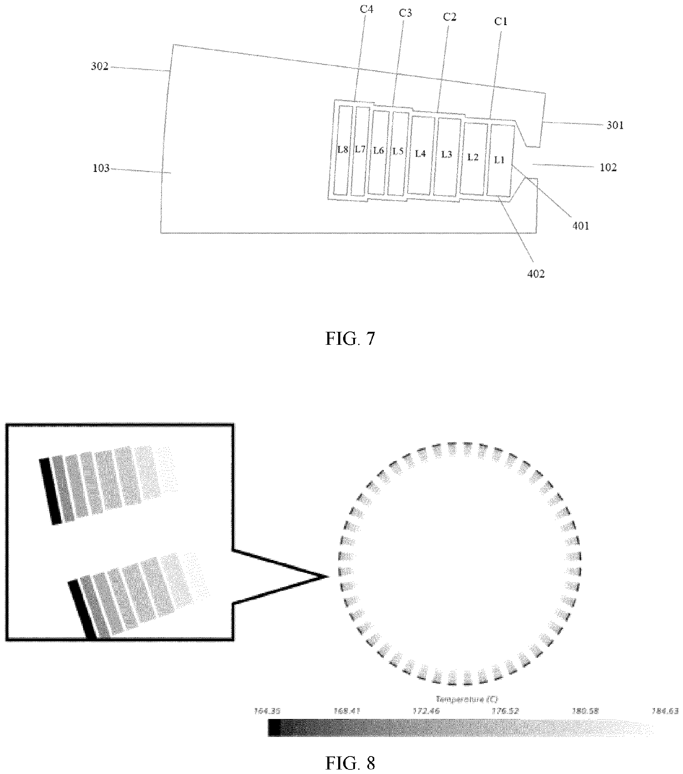

As illustrated in FIG. 7, the technical solution according to this embodiment also employs stepped stator slots. Each of the stator slots is formed of four rectangular slots in communication with each other, and eight layers of rectangular conductors are arranged in each of the stator slots. Rectangular slots in each of the stator slots are successively named as C1, C2, C3, and C4. The rectangular slot C1 is positioned at the opening of the stator slot, and is a rectangular slot, closest to the center of the stator core, in the stator slot. The rectangular slot C4 is positioned at the bottom of the stator slot, and is a rectangular slot, closest to an outer circle of the stator core, in the stator slot. Rectangular conductors in each of the stator slots are successively named as L1, L2, L3, L4, L5, L6, L7, and L8. The rectangular conductor L1 is positioned at the opening of the stator slot, and is an innermost layer of rectangular conductor, closest to the center of the stator core, in the stator slot. The rectangular conductor L8 is positioned at the bottom of the stator slot, and is an outermost layer of rectangular conductor, closest to an outer circle of the stator core, in the stator slot. The conductors L1 and L2 belong to the same conductor set and are both received in the rectangular slot C1, and have equal thicknesses and widths; the conductors L3 and L4 belong to the same conductor set and are both received in the rectangular slot C2, and have equal thicknesses and widths; the conductors L5 and L6 belong to the same conductor set and are both received in the rectangular slot C3, and have equal thicknesses and widths; and the conductors L6 and L7 belong to the same conductor set and are both received in the rectangular slot C4, and have equal thicknesses and widths.

As listed in Table 4, in the third embodiment, the widths of the conductors L2, L4, L6, and L8 are successively increased; the thicknesses of the conductors L2, L4, L6, and L8 are successively decreased; the cross-sectional areas of the conductors L1 and L2 are equal, the cross-sectional areas of the conductors L3 and L4 are equal, the cross-sectional areas of the conductors L5 and L6 are equal, and the cross-sectional areas of the conductors L7 and L8 are equal; and the cross-sectional areas of the conductors L2, L4, L6, and L8 are successively decreased, wherein although the cross-sectional area of the conductor L4 is greater than that of the conductor L2, these two cross-sectional areas are substantially approximate. The cross-sectional areas of the conductors L6 and L8 are slightly different. An average cross-sectional area is 8.42 mm², the cross-sectional area of the conductor L1 is 1.12 times of the average cross-sectional area, the cross-sectional area of the conductor L2 is also greater than the average cross-sectional area, the cross-sectional area of the conductor L8 is minimum and is 0.79 times of the average cross-sectional area, and the cross-sectional area of the conductor L6 is also less than the average cross-sectional area. In addition, in this embodiment, an average cross-sectional area of the conductors L2 and L4 is greater than an average cross-sectional area of the conductor L6 and L8. The conductor L1 has a maximum loss density of 0.85 W/mm², and the conductor L4 has a minimum loss density of 0.43 W/mm².

**Table 4 Simulation data sheet for conductors in stator slots in the second embodiment**

| Serial number of scheme | Serial number of conductor in stator slot | L1 | L2 | L3 | L4 | L5 | L6 | L7 | L8 |
|---|---|---|---|---|---|---|---|---|---|
| Third Embodiment | Width of conductor (mm) | 5.4 | 5.4 | 5.88 | 5.88 | 6.32 | 6.32 | 6.76 | 6.76 |
| | Thickness of conductor (mm) | 1.75 | 1.75 | 1.69 | 1.69 | 1.19 | 1.19 | 1.00 | 1.00 |
| | Cross-sectional area of conductor (mm²) | 9.45 | 9.45 | 9.94 | 9.94 | 7.52 | 7.52 | 6.76 | 6.76 |
| | Loss of single conductor (W) | 8.02 | 5.29 | 4.70 | 4.23 | 5.15 | 5.12 | 5.69 | 5.65 |
| | Loss density (W/mm²) | 0.85 | 0.56 | 0.47 | 0.43 | 0.68 | 0.68 | 0.84 | 0.84 |
| | Maximum temperature (°C) | 184.6 | 181.1 | 178.1 | 176.6 | 176.1 | 174.5 | 171.0 | 164.6 |
| | Minimum temperature (°C) | 184.4 | 180.9 | 177.9 | 176.4 | 175.9 | 174.3 | 170.8 | 164.3 |

FIG. 8 is a schematic diagram of temperature field distribution of windings in stator slots of a stator assembly when a motor is running according to the third embodiment of the present disclosure. For the specific simulation data thereof, reference may be made to Table 4. The temperatures are gradually decreased along a direction from the center of the stator core to an outer wall of the stator core. In the same stator slot, the innermost layer of rectangular conductor has a maximum temperature of up to 184.6°C; the outermost layer of rectangular conductor has a minimum temperature of 164.3°C; and a maximum temperature difference of the windings in the stator slot is 20.3°C.

Compared with the comparative example, in the stator assembly according to the third embodiment, although the innermost layer of rectangular conductor still has a maximum loss density, this maximum loss density is obviously decreased relative to that in the comparative example. In this way, the temperature of the innermost layer of rectangular conductor of the windings in the slot is decreased, i.e., the maximum temperature of the windings in the slot is decreased, and has a decreased temperature difference from the minimum temperature of the windings in the stator slot. Therefore, in the stator assembly according to the third embodiment, although the loss densities of the outer layers of rectangular conductors increase, the outer layers of rectangular conductors tend to dissipate heat; and the loss density of the innermost layer of rectangular conductor is decreased, which is conducive to balancing heat generation and heat dissipation.

### Fourth Embodiment

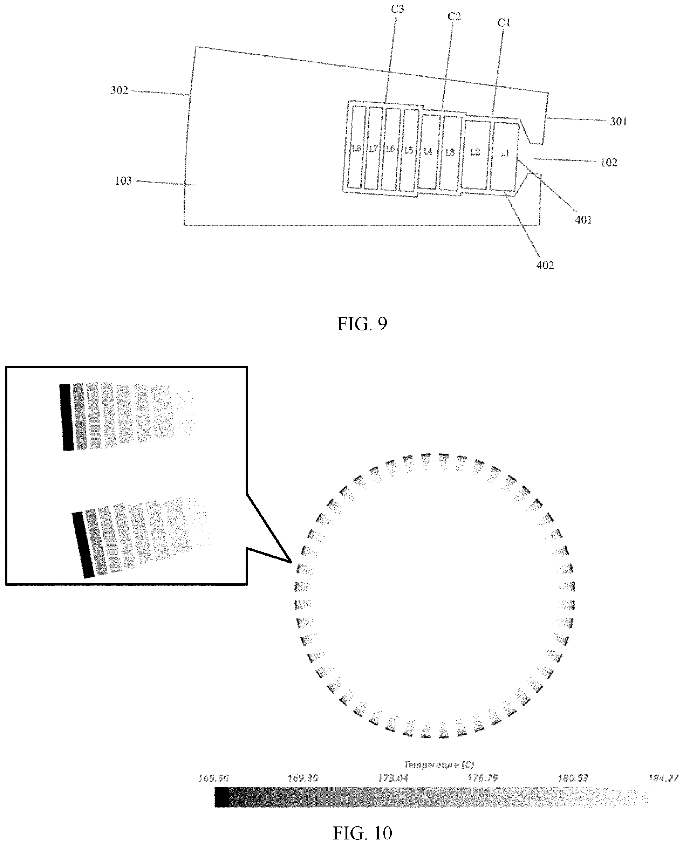

As illustrated in FIG. 9, the technical solution according to this embodiment also employs stepped stator slots. Each of the stator slots is formed of three rectangular slots in communication with each other, and eight layers of rectangular conductors are arranged in each of the stator slots. Rectangular slots in each of the stator slots are successively named as C1, C2, and C3. The rectangular slot C1 is positioned at the opening of the stator slot, and is a rectangular slot, closest to the center of the stator core, in the stator slot. The rectangular slot C3 is positioned at the bottom of the stator slot, and is a rectangular slot, closest to an outer circle of the stator core, in the stator slot. Rectangular conductors in each of the stator slots are successively named as L1, L2, L3, L4, L5, L6, L7, and L8. The rectangular conductor L1 is positioned at the opening of the stator slot, and is an innermost layer of rectangular conductor, closest to the center of the stator core, in the stator slot. The rectangular conductor L8 is positioned at the bottom of the stator slot, and is an outermost layer of rectangular conductor, closest to an outer circle of the stator core, in the stator slot. The conductors L1 and L2 belong to the same conductor set and are both received in the rectangular slot C1, and have equal thicknesses and widths; the conductors L3 and L4 belong to the same conductor set and are both received in the rectangular slot C2, and have equal thicknesses and widths; and the conductors L5, L6, L7, and L8 belong to the same conductor set and are all received in the rectangular slot C3, and have equal widths, the conductors L5 and L6 have equal thicknesses, and the conductors L7 and L8 have equal thicknesses.

**Table 5 Simulation data sheet for conductors in stator slots in the fourth embodiment**

| Serial number of scheme | Serial number of conductor in stator slot | L1 | L2 | L3 | L4 | L5 | L6 | L7 | L8 |
|---|---|---|---|---|---|---|---|---|---|
| Fourth Embodiment | Width of conductor (mm) | 5.40 | 5.40 | 5.88 | 5.88 | 6.54 | 6.54 | 6.54 | 6.54 |
| | Thickness of conductor (mm) | 2.00 | 2.00 | 1.44 | 1.44 | 1.16 | 1.16 | 1.04 | 1.04 |
| | Cross-sect ional area of conductor (mm²) | 10.80 | 10.80 | 8.47 | 8.47 | 7.59 | 7.59 | 6.80 | 6.80 |
| | Loss of single | 8.25 | 5.17 | 4.97 | 4.88 | 5.53 | 5.25 | 5.50 | 5.42 |
| | conductor (W) | | | | | | | | |
| | Loss density (W/mm²) | 0.76 | 0.48 | 0.59 | 0.58 | 0.73 | 0.69 | 0.81 | 0.80 |
| | Maximum temperatur e(°C) | 184.3 | 181.5 | 180.3 | 179.6 | 178.4 | 176.3 | 172.5 | 165.7 |
| | Minimum temperatur e(°C) | 184.1 | 181.3 | 180.1 | 179.4 | 178.2 | 176.1 | 172.3 | 165.6 |

As listed in Table 5, in the fourth embodiment, the widths of the conductors L2, L4, and L8 are successively increased; the thicknesses of the conductors L2, L4, L6, and L8 are successively decreased; the cross-sectional areas of the conductors L1 and L2 are equal, the cross-sectional areas of the conductors L3 and L4 are equal, the cross-sectional areas of the conductors L5 and L6 are equal, and the cross-sectional areas of the conductors L7 and L8 are equal; the cross-sectional areas of the conductors L2, L4, L6, and L8 are successively decreased; and an average cross-sectional area is 8.41 mm², the cross-sectional area of the conductor L1 is 1.28 times of the average cross-sectional area, and the cross-sectional area of the conductor L8 is minimum and is 0.80 times of the average cross-sectional area. The cross-sectional areas of the conductors L2 and L4 are both greater than the average cross-sectional area, and the cross-sectional areas the conductors L6 and L8 are both less than the average cross-sectional area, and an average cross-sectional area of the conductors L2 and L4 is greater than an average cross-sectional area of the conductors L6 and L8. The loss densities of the conductors L7, L8, L1, L5, L6, L3, L4, and L2 are successively decreased. The conductor L7 has a maximum loss density of 0.81 W/mm², and the conductor L2 has a minimum loss density of 0.48 W/mm².

FIG. 10 is a schematic diagram of temperature field distribution of windings in stator slots of a stator assembly when a motor is running according to the fourth embodiment of the present disclosure. For the specific simulation data thereof, reference may be made to Table 5. The temperatures are gradually decreased along a direction from the center of the stator core to an outer wall of the stator core. In the same stator slot, the innermost layer of rectangular conductor has a maximum temperature of up to 184.3°C; and the outermost layer of rectangular conductor has a minimum temperature of 165.6°C. A maximum temperature difference of the windings in the stator slot is 18.7°C

Compared with the comparative example, in the stator assembly according to the fourth embodiment, the conductor L7 has a maximum loss density which is however decreased relative to that in the comparative example, and a difference between the maximum loss density and a minimum loss density of the rectangular conductors in the stator slot is decreased, and a loss density of the innermost layer of rectangular conductor is likewise decreased. In this way, the temperature of the innermost layer of rectangular conductor of the windings in the slot is decreased, i.e., the maximum temperature of the windings in the slot is decreased, and has a decreased temperature difference from the outermost layer of rectangular conductor. Therefore, in the stator assembly according to the fourth embodiment, although the loss densities of the outer layers of rectangular conductors increase, the outer layers of rectangular conductors tend to dissipate heat; and the loss density of the innermost layer of rectangular conductor is decreased, which is conducive to balancing heat generation and heat dissipation.

### Fifth Embodiment

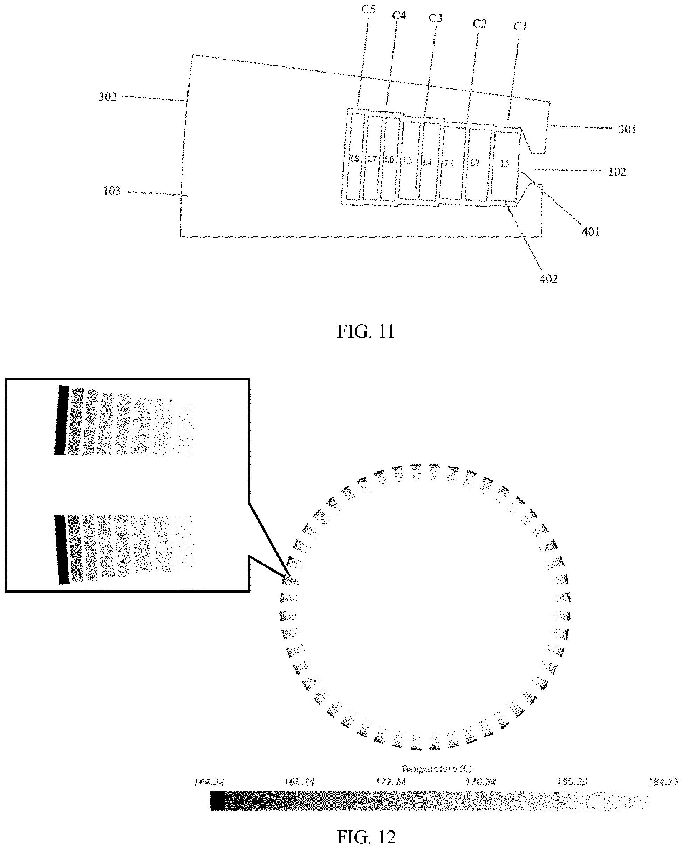

As illustrated in FIG. 11, the technical solution according to this embodiment also employs stepped stator slots. Each of the stator slots is formed of five rectangular slots in communication with each other, and eight layers of rectangular conductors are arranged in each of the stator slots. Rectangular slots in each of the stator slots are successively named as C1, C2, C3, C4, and C5. The rectangular slot C1 is positioned at the opening of the stator slot, and is a rectangular slot, closest to the center of the stator core, in the stator slot. The rectangular slot C5 is positioned at the bottom of the stator slot, and is a rectangular slot, closest to an outer circle of the stator core, in the stator slot. Rectangular conductors in each of the stator slots are successively named as L1, L2, L3, L4, L5, L6, L7, and L8. The rectangular conductor L1 is positioned at the opening of the stator slot, and is an innermost layer of rectangular conductor, closest to the center of the stator core, in the stator slot. The rectangular conductor L8 is positioned at the bottom of the stator slot, and is an outermost layer of rectangular conductor, closest to an outer circle of the stator core, in the stator slot. The conductor L1 is received in the rectangular slot C1; the conductor L2 and L3 belong to the same conductor set and are both received in the rectangular slot C2, and have equal thicknesses and widths; the conductors L4 and L5 belong to the same conductor set and are both received in the rectangular slot C3, and have equal thicknesses and widths; the conductors L6 and L7 belong to the same conductor set and are both received in the rectangular slot C4, and have equal thicknesses and widths; and the conductor L8 is received in the rectangular slot C5.

**Table 6 Simulation data sheet for conductors in stator slots in the fifth embodiment**

| Serial number of scheme | Serial number of conducto r in stator slot | L1 | L2 | L3 | L4 | L5 | L6 | L7 | L8 |
|---|---|---|---|---|---|---|---|---|---|
| Fifth Embodiment | Width of conducto r (mm) | 5.40 | 5.64 | 5.64 | 6.10 | 6.10 | 6.54 | 6.54 | 6.76 |
| | Thicknes s of conducto r (mm) | 2.00 | 1.72 | 1.72 | 1.32 | 1.32 | 1.10 | 1.10 | 1.00 |
| | Cross-se ctional area of | 10.80 | 9.70 | 9.70 | 8.05 | 8.05 | 7.19 | 7.19 | 6.76 |
| | conducto r (mm²) | | | | | | | | |
| | Loss of single conducto r(W) | 8.51 | 5.19 | 4.53 | 4.90 | 4.79 | 5.32 | 5.26 | 5.58 |
| | Loss density (W/mm² ) | 0.79 | 0.53 | 0.47 | 0.61 | 0.60 | 0.74 | 0.73 | 0.83 |
| | Maximu m temperat ure (°C) | 184.3 | 181.0 | 178.9 | 177.8 | 176.7 | 174.6 | 170.9 | 164.5 |
| | Minimu m temperat ure (°C) | 184.0 | 180.8 | 178.7 | 177.7 | 176.5 | 174.5 | 170.8 | 164.2 |

As listed in Table 6, in the fifth embodiment, the widths of the conductors L1, L3, L5, L7, and L8 are successively increased; the thicknesses of the conductors L1, L3, L5, L7, and L8 are successively decreased; the cross-sectional areas of the conductors L2 and L3 are equal, the cross-sectional areas of the conductors L4 and L5 are equal, and the cross-sectional areas of the conductors L6 and L7 are equal; the cross-sectional areas of the conductors L1, L3, L5, L7, and L8 are successively decreased; and an average cross-sectional area is 8.43 mm², the cross-sectional area of the conductor L1 is 1.28 times of the average cross-sectional area, and the cross-sectional area of the conductor L8 is minimum and is 0.80 times of the average cross-sectional area. With the conductors L4 and L5 arranged in the middle as a reference, an average cross-sectional area of the conductors L1, L2, and L3 is greater than an average cross-sectional area of the conductors L6, L7, and L8. It is apparent that an average cross-sectional area of the conductors close to the opening of the stator slot is greater than an average cross-sectional area of the conductors close to the bottom of the stator slot. The conductor L8 has a maximum loss density of 0.83 W/mm², and the conductor L3 has a minimum loss density of 0.47 W/mm².

FIG. 12 is a schematic diagram of temperature field distribution of windings in stator slots of a stator assembly when a motor is running according to the fifth embodiment of the present disclosure. For the specific simulation data thereof, reference may be made to Table 6. The temperatures are gradually decreased along a direction from the center of the stator core to an outer wall of the stator core. In the same stator slot, the innermost layer of rectangular conductor has a maximum temperature of up to 184.3°C; and the outermost layer of rectangular conductor has a minimum temperature of 164.2°C. A maximum temperature difference of the windings in the stator slot is 20.1°C

Compared with the comparative example, in the stator assembly according to the fifth embodiment, the outermost layer of rectangular conductor has a maximum loss density which is however decreased relative to that in the comparative example, and a difference between the maximum loss density and a minimum loss density of the rectangular conductors in the stator slot is decreased, and a loss density of the innermost layer of rectangular conductor is likewise decreased. In this way, the temperature of the innermost layer of rectangular conductor of the windings in the slot is decreased, i.e., the maximum temperature of the windings in the slot is decreased, and has a decreased temperature difference from the outermost layer of rectangular conductor. Therefore, in the stator assembly according to the fifth embodiment, although the loss densities of the outer layers of rectangular conductors increase, the outer layers of rectangular conductors tend to dissipate heat; and the loss density of the innermost layer of rectangular conductor is decreased, which is conducive to balancing heat generation and heat dissipation.

In the embodiments of the present disclosure, the stator slots are respectively formed of three, four, and five rectangular slots in communication with each other, the stator slots may also be formed by other numbers of rectangular slots in communication with each other, and other numbers of rectangular conductors may also be arranged in each of the stator slots.

In the embodiments of the present disclosure, the cross-sectional areas of the rectangular slots have a tendency of decrease along a direction from the opening to the bottom of the stator slot. The conductors are averagely divided into two parts according to the number of conductors along a depthwise direction of the stator slot, or these conductors are divided into two approximately equal parts. An average cross-sectional area of the rectangular conductors close to the center of the stator core is greater than an average cross-sectional area of all the rectangular conductors in the stator slots.

For example, when an even number of conductors are arranged, the conductors are divided into two equal parts along a line connecting the opening to the bottom of the stator slot. One part of conductors is close to the opening of the stator slot, and the other part of conductors is close to the bottom of the stator slot. In this case, an average cross-sectional area of the conductors close to the opening of the stator slot is greater than an average cross-sectional area of the conductors close to the bottom of the stator slot. Alternatively, when an odd number of conductors are arranged, the number of conductors close to the center of the stator core is less than half of the total number of conductors, and an average cross-sectional area of the rectangular conductors close to a center of the stator core is greater than an average cross-sectional area of all the rectangular conductors in the stator slot.

During research and development, the inventors of the present disclosure have found that heat dissipation of the conductors at the openings of the stator slots is difficult. According to various embodiments of the present disclosure, on the premise that a total cross-sectional area of the conductors is constant, increasing or significantly increasing the cross-sectional areas of the conductors close to the opening of the stator slots effectively lowers a maximum operating temperature, and improving the temperature difference between different layers of conductors. It can be seen that in the case where the total cross-sectional area of the conductors is constant, this effect on improving the temperature difference is more obvious when the cross-sectional areas of the conductors positioned from the opening to the bottom of the stator slot are successively arranged from large to small. However, when the cross-sectional areas of the conductors from the opening to the bottom of the stator slot are generally from large to small, the cross-sectional areas of the conductors in some adjacent rectangular slots are approximate or the sizes thereof are approximate, and there is also a significant temperature improvement effect. For example, a significant improvement can be achieved as long as the average cross-sectional area of the conductors close to the opening of the stator slot is greater than the average cross-sectional area of the conductors close to the bottom of the stator slot. In other words, the average cross-sectional area of the rectangular conductors close to the center of the stator core is greater than the average cross-sectional area of all the rectangular conductors in the stator slots, without satisfying the requirement that the cross-sectional areas of the conductors are successively decreased from the opening to the bottom of the stator slot.

In addition, the applicant has found that, in order to further improve the power density of the motor product, the high power density motor of the new energy automobile drive motor uses more and more square-section conductors as components of the motor, but due to leakage flux chains in the motor slot, the square conductors placed in the slot always have magnetic flux lines passing along the circumferential direction, which results in a large eddy current inside the conductors, and this eddy current also results in a significant increase in the AC loss of the motor during high-speed and high-frequency operation. In order to solve this problem, the number of layers of conductors in the motor slot is designed larger and larger. However, an excessive number of slots not only results in an increased area of insulation and air, but also increases the manufacture cost.

Therefore, the applicant has made some improvements on the rectangular conductors. The present disclosure further provides an embodiment of an enameled wire stator with low AC loss, wherein the enameled wire with a recess is placed at an opening of a mounting slot or close to the opening. Since in armature reaction, a magnetic potential is the strongest at the opening, a leakage magnetic chain in the slot is most easily generated at the opening. With the enameled wire with the recess, current distribution uniformity of conductors at the opening may be effectively improved, thereby reducing alternating current loss. In addition, the structure is simple and convenient to use.

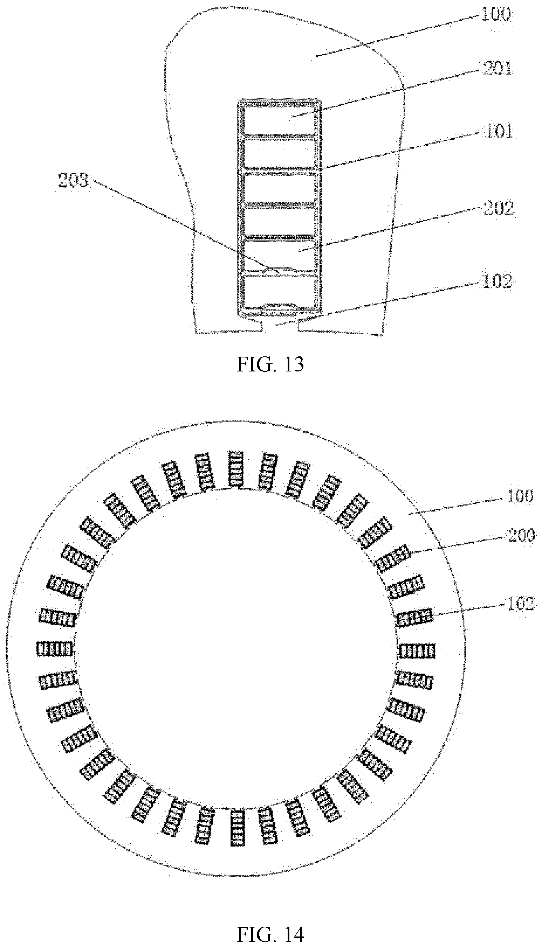

For the purpose of highlighting enameled wires, the numbering using L+ numbers is not used in the corresponding drawings, but the enameled wires are numbered using digital numbers in the drawings. As illustrated in FIGS. 13 to 14, a seventh embodiment provides an enameled wire stator with low AC loss. A plurality of mounting slots 101 configured to receive enameled wire sets 200 are arranged in an inner wall of the stator 100. Each of the enameled wire sets 200 comprises a plurality of first enameled wires 201 and a plurality of second enameled wires 202. Recesses 203 are arranged in bottoms of the second enameled wires 202 (the direction close to the opening of the stator slot). The second enameled wires 202 are arranged at an end of the opening 102 of each of the mounting slots 101, and the first enameled wires 201 are arranged at an end of the second enameled wires 202 facing away from the opening 102.

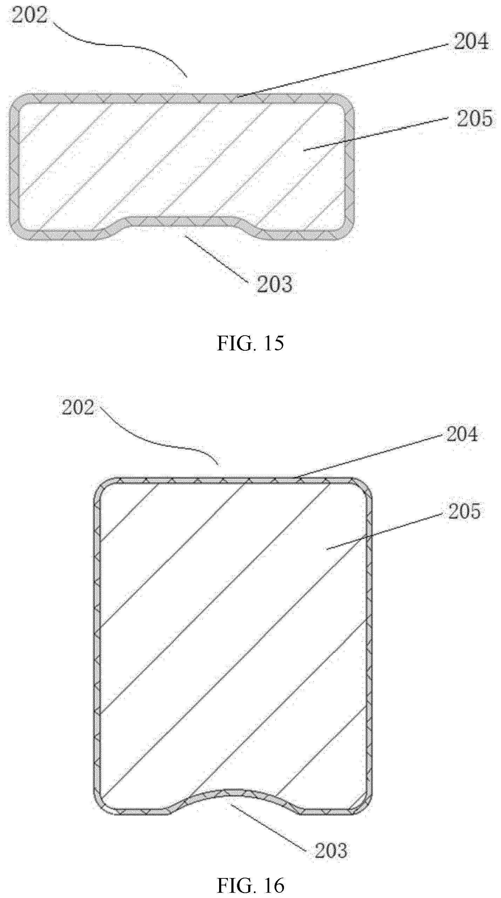

As illustrated in FIGS. 15 and 16, in the enameled wire stator with low AC loss as described above, each of the first enameled wires 201 is a square metal core 205 coated with an insulative layer 204, and each of the second enameled wires 202 is a square metal core 205 coated with an insulative layer 204. The insulative layers 204 all uniformly surround the metal core 205.

In the enameled wire stator with low AC loss as described above, each of the recesses 203 is a trapezoidal recess or a semi-circular recess or a recess of other shapes, and the recesses 203 are preferably arranged in middle parts of the second enameled wires 202, so as to reduce the eddy current.

In the enameled wire stator with low AC loss as described above, each of the recesses 203 has a depth of 0.15 mm to 0.5 mm, and the depth and size of the recesses 203 are set according to the shape and size of the second enameled wires 202.

In the enameled wire stator with low AC loss as described above, the recesses 203 in the second enameled wires 202 face the opening 102 of the mounting slot 101, and when arranging the first enameled wires 201 and the second enameled wires 202, the second enameled wires 202 are preferentially arranged close to the end of the opening 102 of the mounting slot 101, and the recesses 203 in the second enameled wires 202 face the opening 102 of the mounting slot 101.

In the enameled wire stator with low AC loss as described above, the number of second enameled wires 202 in each of the mounting slots 101 is less than half of the total number of first enameled wires 201 and second enameled wires 202, and one or more of the first enameled wires 201 and one or more of the second enameled wires 202 are arranged in the mounting slot 101.

In the enameled wire stator with low AC loss as described above, the stator 100 is an iron core stacked by a plurality of punching sheets.

In the enameled wire stator with low AC loss as described above, the mounting slots 101 are mounting slots having equal widths.

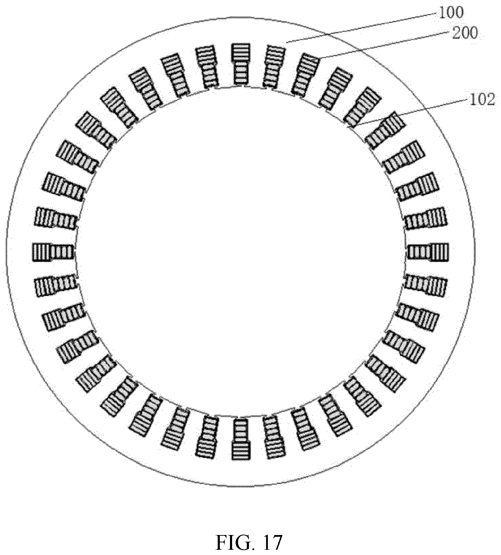

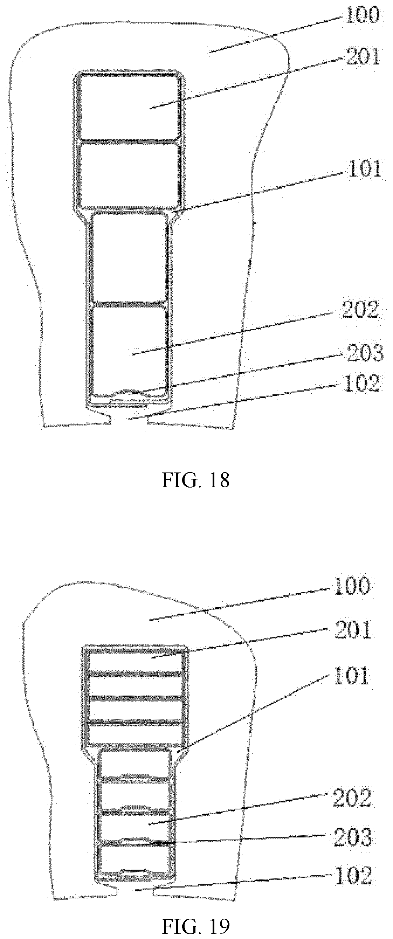

As illustrated in FIGS. 16 to 18, another embodiment provides an enameled wire stator with low AC loss. A plurality of mounting slots 101 configured to receive enameled wire sets 200 are arranged in an inner wall of the stator 100. Each of the enameled wire sets 200 comprises a plurality of first enameled wires 201 and a plurality of second enameled wires 202. Recesses 203 are arranged in bottoms of the second enameled wires 202. The second enameled wires 202 are arranged at an end of the opening 102 of each of the mounting slots 101, and the first enameled wires 201 are arranged at an end of the second enameled wires 202 facing away from the opening 102.

As illustrated in FIGS. 15 and 16, in the enameled wire stator with low AC loss as described above, each of the first enameled wires 201 is a square metal core 205 coated with an insulative layer 204, and each of the second enameled wires 202 is a square metal core 205 coated with an insulative layer 204. The insulative layers 204 all uniformly surround the metal core 205.

In the enameled wire stator with low AC loss as described above, each of the recesses 203 is a trapezoidal recess or a semi-circular recess or a recess of other shapes, and the recesses 203 are preferably arranged in middle parts of the second enameled wires 202, so as to reduce the eddy current.

In the enameled wire stator with low AC loss as described above, each of the recesses 203 has a depth of 0.15 mm to 0.5 mm, and the depth and size of the recesses 203 are set according to the shape and size of the second enameled wires 202.

In the enameled wire stator with low AC loss as described above, the recesses 203 in the second enameled wires 202 face the opening 102 of the mounting slot 101, and when arranging the first enameled wires 201 and the second enameled wires 202, the second enameled wires 202 are preferentially arranged close to the end of the opening 102 of the mounting slot 101, and the recesses 203 in the second enameled wires 202 face the opening 102 of the mounting slot 101.

In the enameled wire stator with low AC loss as described above, the number of second enameled wires 202 in each of the mounting slots 101 is less than half of the total number of first enameled wires 201 and second enameled wires 202, and one or more of the first enameled wires 201 and one or more of the second enameled wires 202 are arranged in the mounting slot 101.

In the enameled wire stator with low AC loss as described above, the stator 100 is an iron core stacked by a plurality of punching sheets.

In the enameled wire stator with low AC loss as described above, the mounting slots 101 are mounting slots having unequal widths, and the width of each of the mounting slots 101 close to the end of the opening 102 is smaller than the width thereof at the opposite end.

In the enameled wire stator with low AC loss as described above, the enameled wire with a recess is placed at an opening of a mounting slot or close to the opening. Since in armature reaction, a magnetic potential is the strongest at the opening, a leakage magnetic chain in the slot is most easily generated at the opening. With the enameled wire with the recess, current distribution uniformity of conductors at the opening may be effectively improved, thereby reducing alternating current loss. In addition, the structure is simple and convenient to use.

The stator in the embodiments of the present disclosure reduces the AC loss while improving heat dissipation of the motor.

An embodiment of the present disclosure further provides a motor. The motor includes a rotor assembly and the stator assembly as described in the embodiments above. The rotor assembly is positioned inside the stator assembly.

In the stator assembly of the motor, a distance between two adjacent sets of stator slots at an end closest to a center of the stator core is equal or approximate to a distance between the two adjacent sets of stator slots at an end closest to an outer side of the stator core.

Although the present application is described in detail with reference to these embodiments, a person skilled in the art may also make various modifications to the technical solutions disclosed in the embodiments, or make equivalent replacements to a part of the technical features contained therein. Such modifications or replacement, made without departing from the principles of the present disclosure, shall fall within the scope of the present disclosure.

## Claims

1. A stator assembly, comprising: a stator core and a winding; wherein a plurality of stator slots are arranged in the stator core, the stator slots being successively arranged in an annular array along a circumferential direction of the stator core; and the winding is wound on a rectangular conductor;
wherein an opening of each of the stator slots is arranged in a side closest to a center of the stator core, and a plurality of layers of rectangular conductors are mounted in each of the stator slots, the layers of rectangular conductors being successively arranged along a radial direction of the stator core; wherein an average cross-sectional area of the rectangular conductors close to a center of the stator core is greater than an average cross-sectional area of all the rectangular conductors in the stator slot.

2. The stator assembly according to claim 1, wherein in the same one of the stator slots, the cross-sectional area of a layer of rectangular conductor closest to the center of the stator core is maximum, and the cross-sectional area of a layer of rectangular conductor closest to an outer side of the stator core is minimum.

3. The stator assembly according to claim 1 or 2, wherein the stator slots are stepped stator slots, and a plurality of rectangular slots in communication with each other are arranged in the stepped stator slots; wherein cross-sectional areas of the rectangular slots are successively decreased along a direction from the center of the stator core to an outer side of the stator core.

4. The stator assembly according to claim 3, wherein a conductor set formed of a plurality of layers of rectangular conductors is arranged in each of the rectangular slots, a size of each of the rectangular slots is equal to a size of the conductor set therein, and the cross-sectional areas of the rectangular conductors in the same rectangular slot are successively decreased along the direction from the center of the stator core to the outer side of the stator core.

5. The stator assembly according to any one of claims 1 to 4, wherein in the same one of the stator slots, with respect to cross-sectional areas of the plurality of layers of rectangular conductors, a maximum cross-sectional area is not greater than 1.29 times of an average cross-sectional area.

6. The stator assembly according to claim 5, wherein in the same one of the stator slots, with respect to the cross-sectional areas of the plurality of layers of rectangular conductors, a minimum cross-sectional area is not less than 0.79 times of the average cross-sectional area.

7. The stator assembly according to any one of claims 1 to 6, wherein in the same one of the stator slots, widths of conductor sets are successively increased along a direction from the center of the stator core to an outer side of the stator core.

8. The stator assembly according to claim 7, wherein in the same one of the stator slots, thicknesses of the conductor sets are successively decreased along the direction from the center of the stator core to the outer side of the stator core.

9. The stator assembly according to claim 1 or 2, wherein the stator slots are equal-width stator slots.

10. The stator assembly according to any one of claims 1 to 9, wherein the rectangular conductors are enameled wires, the enameled wire close to the outer side of the stator core are first enameled wires, and the enameled wires close to the center of the stator core are second enameled wires, recesses being arranged in bottoms of the second enameled wires.

11. The stator assembly according to claim 10, wherein the recesses are recesses having a trapezoidal cross section or recesses having a semi-circular cross section, and the recesses face towards the openings of the stator slots.

12. The stator assembly according to claim 11, wherein depths of the recesses range from 0.15 mm to 0.5 mm.

13. The stator assembly according to claim 10, wherein in the same one of the stator slots, a number of the second enameled wires is less than half of a total number of the first enameled wires and the second enameled wires.

14. A motor, comprising: a rotor assembly, and further comprising: the stator assembly as defined in any one of claims 1 to 14; wherein the rotor assembly is situated on an inner side of the stator assembly.

15. The motor according to claim 14, wherein a distance between two adjacent sets of stator slots at an end closest to a center of the stator core is equal or approximate to a distance between the two adjacent sets of stator slots at an end closest to an outer side of the stator core.
